# EUROPEAN PATENT APPLICATION

(11) **EP 4 289 717 A1**
(43) Date of publication of application: **13.12.2023**
(21) Application number: 22177653.7
(22) Date of filing: 07.06.2022
(51) Int. Cl.: B63B 22/02, B63B 35/34, F03D 80/50

(54) **SERVICE SYSTEM FOR SERVICING A MARINE STRUCTURE**

(71) Applicant: Stel, Evert, 1141 AT Monnickendam (NL); Consulting Trust Xtend new media GmbH, 42579 Heiligenhaus (DE)
(72) Inventor: Stel, Evert, 1141 PJ Monnickendam (NL)
(74) Representative: Michalski Hüttermann & Partner Patentanwälte mbB

(57) **Abstract**

The invention relates to a service system for servicing a marine structure. According to the invention, the service system (1) for servicing a marine structure is provided with a vertical tower (7) supported on a floating or seabed-mounted structure, wherein the service system (1) comprises an inner opening for enclosing the tower (7), the inner opening comprises a circumferential wall (2), the circumferential wall (2) being provided with rollers (3), the rollers (3) are mounted in such a way that the service system (1) can slide up and down in the vertical direction along the tower (7), the rollers (3) are equipped with brakes for braking the rollers (3), the service system (1) is provided with a buoyancy body (5), and the buoyancy body (5) comprises a platform (6) which enables personnel (9) to be transferred from a transport vehicle (10) which is moored to the service system (1).

## Description

The invention concerns a service system for servicing a marine structure provided with a vertical tower supported on a floating or seabed-mounted structure, wherein the service system comprises an inner opening for enclosing the tower, the inner opening comprises a circumferential wall, the circumferential wall being provided with guides, the guides are mounted in such a way that the service system can slide up and down in the vertical direction along the tower, the service system is provided with a buoyancy body, and the buoyancy body comprises a platform which enables personnel to be transferred from a transport vehicle which is moored to the service system.

Maritime structures, such as wind turbines, require regular maintenance to withstand the demanding weather conditions to which they are exposed and to maintain their functionality. Service systems enable the maintenance of these maritime structures by allowing maintenance personnel access to the maritime structures. For this purpose, it is often intended that means of transport, such as boats, provided with a coupling unit are connected to the maritime structure via an extendable bridge or a ladder in such a way that maintenance personnel can reach the maritime structure from the boat via the service system in order to be able to carry out the maintenance work. However, as the sea state and the associated wave height increase, the process of coupling the moving boat to the static maritime structure via a service system becomes increasingly demanding and correspondingly more dangerous for the maintenance personnel. In case of doubt, planned maintenance work has to be postponed or cancelled.

WO 2020/240068 A1 relates to a method for the maintenance of a marine structure, the structure comprising a wind turbine and at least one essentially vertical shaft. The method comprises the use of an auxiliary floating system comprising: at least one floating element that remains semi-submerged throughout the process of maintaining the marine structure; at least one coupling structure that connects the system to the floating structure; and contact elements and tightening elements, which contact and tightening elements are secured to the coupling structure and which are intended to solidly connect the system to the shaft. By means of the tightening elements, a tight connection to the shaft can be made, which corresponds to an instantaneous stop of the coupling structure sliding along the shaft and thus poses a risk to personnel of falling off the system or injuring themselves and ultimately corresponds to a limitation of maintainability.

Based on this, it is the object of the invention to provide a service system that enables a safer transfer of personnel.

This object is solved by the subject-matter of claim 1. Preferred further embodiments can be found in the dependent claims.

According to the invention, a service system for servicing a marine structure provided with a vertical tower supported on a floating or seabed-mounted structure is provided, wherein the service system comprises an inner opening for enclosing the tower, the inner opening comprises a circumferential wall, the circumferential wall being provided with rollers, the rollers are mounted in such a way that the service system can slide up and down in the vertical direction along the tower, the rollers are equipped with brakes for braking the rollers, the service system is provided with a buoyancy body, and the buoyancy body comprises a platform which enables personnel to be transferred from a transport vehicle which is moored to the service system.

The circumferential wall provided with rollers serves to keep the service system centered by the rollers so that the service system can slide up and down in a vertical direction along the tower. This allows the service system to move along with the amplitude of the waves transmitted to the service system via the buoyancy body. Furthermore, by moving with the amplitude of the waves, the transfer of personnel is possible in almost any wave condition. The previously existing limitations with regard to the transfer of personnel from a moored vehicle to the maritime structure due to weather and wave conditions no longer exist in this way. The personnel can easily transfer from the moored vehicle to the service system, since the moored vehicle always has the same vertical height along the tower as the platformed buoyancy body of the service system. By amplitude of the waves, reference is made to the oscillatory properties of the waves, so that an amplitude is understood here as the maximum or minimum excursion of a harmonic oscillation from the position of the mean value, which corresponds to the change between wave crests and wave troughs. In addition, the service system can be damped by means of the rollers equipped with brakes and facilitate the transfer of personnel by matching the inertia of the platform to that of the vehicle. Furthermore, the damped oscillation ensures that personnel remain on the platform and a safer stay is provided.

In general, the brakes can be controlled as desired. According to a preferred further development of the invention, however, it is provided that the brakes are controllable via a remote control. The remotely activated brakes allow the service system rollers to be braked either from the maritime structure or from the transport vehicle. Even braking from a remote-control-center is conceivable. In this way, the amplitude of the service system can already be damped when the transport vehicle starts up, making it easier to transfer personnel to the maritime structure and making the overall maintenance process much more efficient in terms of time. The same applies to the transfer of personnel from the maritime structure to the service system. Furthermore, it is also easier to transfer from the service system to the moored transport vehicle without the last person remaining on the service system having to release a brake, since the brake on the rollers can be released remotely from the departing transport vehicle.

It is possible that the service system can be stabilized in various ways. According to a preferred further development of the invention, however, it is provided that the service system comprises vertically extending guides located on the circumferential wall of the inner opening for tilting prevention. The guides extend along the maritime structure in such a way that tilting or canting of the service system is completely avoided.

In principle, the service system can be connected to the maritime structure in various ways. According to a preferred further development of the invention, however, it is provided that the service system comprises a hinge along its diameter for opening and closing the circumferential wall of the inner opening. Through this opening it is possible to transport the service system towards the tower and close it in the sense of a clamp or the like around the maritime structure. Equally easily, the service system can be removed from the tower by flipping open the hinges so that the service system can be moved to another maritime structure. An additional advantage is that maintenance or repair of the service system does not necessarily have to take place offshore, but can also be carried out in temperate waters or on land.

In general, the vertical position of the service system on the maritime structure can be maintained in various ways. According to a preferred further development of the invention, however, it is intended that along the circumferential wall of the inner opening brake feet are provided which are extendable into the inner opening in such a way that the service system can maintain a constant vertical position on the tower by the aid of the brake feet pressing against the outside of tower.

The fact that the brake feet are extendable and exert uniform pressure on the tower also prevents the service system from tilting and decentering. Furthermore, individual extendable brake feet have the advantage that the failure of one brake foot, for example, does not affect the function of the others, thus achieving an additional measure of safety by redundancy. Also, this position-holding mechanism eliminates the need for additional mounting on the towers of the maritime structures, and even on slightly tapered towers of maritime structures, these braking feet are applicable. Keeping a constant vertical position on the tower after slowing down the amplitude by the brakes on the rollers of the service system allows an easy transfer of the personnel from the service structure to the maritime structure.

Basically, the brake feet can be extendable in different ways. According to a preferred further development of the invention, however, it is provided that the brake feet are equipped with hydraulic cylinders. By means of hydraulically extendable brake feet, it is possible to transmit high forces and high power with a small construction volume. Furthermore, movements can be made under full load even from standstill. In addition, force and speed of the hydraulic cylinders are variable.

It is possible that the brakes of the rollers are designed in various ways. According to a preferred further development of the invention, however, it is provided that the brakes for the rollers are electromagnetic brakes. Electromagnetic brakes operate essentially without wear and can be used as recuperation brakes for recuperation, which corresponds to the recovery of energy using a technical process.

In principle, the service system can be used to generate electrical energy in various ways. According to a preferred further development of the invention, however, it is provided that the rollers comprise hubs with dynamos with which electrical energy can be generated by rotation of the rollers. Due to the fact that offshore conditions naturally comprise constant wave motion, respectively wave stroke or tidal range, constant energy can be generated by sliding the service system along the tower of the maritime structure. With electromagnetic brakes mounted at the same time, additional energy is generated by recuperation. This allows energy to be generated at the maritime structure regardless of wind conditions.

According to a preferred further development of the invention it is intended that the surface of the service system is provided with solar panels with which electrical energy can be generated. Offshore there is less diffraction for incident sunlight due to much clearer air than onshore. As a result, solar panels can generate energy with increased efficiency.

According to a preferred further development of the invention it is provided that the service system comprises a battery for storing electric energy. With the aid of a battery for storing electrical energy, the brakes of the rollers can be activated with the energy stored in the service system. Furthermore, tools that require electrical energy can be operated with the energy from the battery. In addition, energy generated with the service system can be stored with the battery.

It is possible, that there may be various links between the maritime structure and the service system. According to a preferred further development of the invention, however, it is provided that the service system comprises an electrical junction for connecting with an electrical connector of the maritime structure. This allows for delivering electric energy generated by the dynamos or the solar cells of the service system to the maritime structure, e.g. in case the maritime structure is a wind turbine, this electric energy may be fed into the electric grid to which the wind turbine is connected. Furthermore, tools that require electrical energy can be operated with the energy from the maritime structure and if the service system contains a battery, the battery can be charged by the maritime structure.

In principle, the buoyancy body can be flooded or drained in various ways. According to a preferred further development of the invention, however, it is provided that the service system comprises a pump for flooding and draining the buoyancy body. For damping the up and down movement (amplitude) of the service system by flooding or increasing the up and down movement for electric power generation by draining. Damping the amplitude by flooding enables further the coordination of ship and buoyancy body and enables safe transfer of personnel.

In general, the buoyancy body can have different shapes and does not have to completely enclose the service system. According to a preferred further development of the invention, however, the buoyancy body has the shape of a hollow cylinder and is arranged along the outside of the service system. By shaping the buoyancy body in this way the ship can always moor all around on the leeward side of the service system, where the leeward side means the side facing away from the wind.

Basically, the platform can have different shapes and does not have to completely enclose the service system. According to a preferred further development of the invention, however, the platform on the buoyancy body also has a cylindrical shape. By shaping the platform in this way personnel have all around comfortable access to the maritime structure.

In principle, the circumferential wall of the inner opening can have various recesses. According to a preferred further development of the invention, however, the circumferential wall of the inner opening has a recess for receiving a vertical ladder of the tower. This allows the ladder of the maritime structure to serve as further guide and personnel can comfortably and safely access the maritime structure from the service system

In the drawings
- Fig. 1: schematically shows a cross-sectional view of a service system for servicing a marine structure with moored transport vehicle according to a preferred embodiment of the invention and
- Fig. 2: schematically shows a top view of the service system for servicing a marine structure with moored transport vehicle according to a preferred embodiment of the invention.

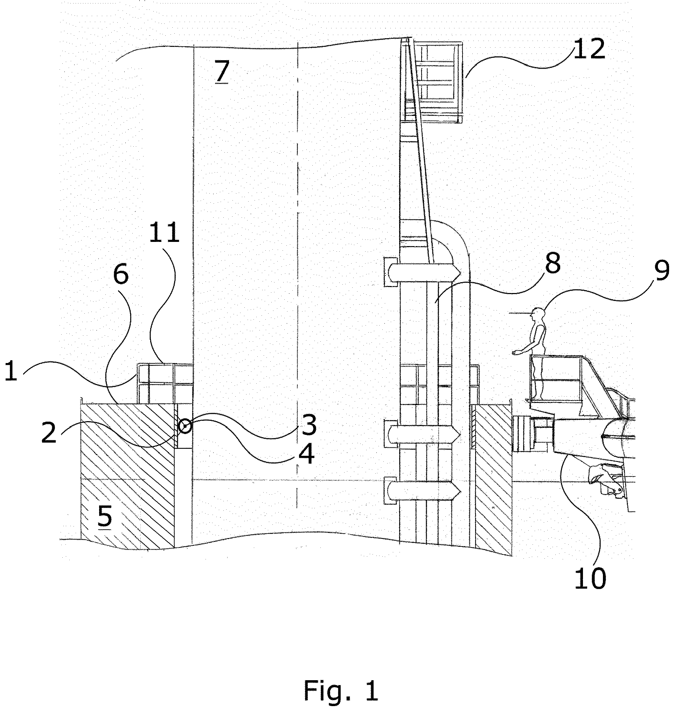

Fig. 1 shows a cross-sectional view of a service system 1 enclosing a tower 7 of an offshore wind turbine. The service system 1 has a circumferential wall 2 along its inner opening, which is provided with rollers 3. The rollers 3 are evenly distributed along the circumferential wall 2 and ensure that the service system 1 can slide along the tower 7 of the wind turbine in a centered manner. Further, the service system 1 is provided with a hollow cylindrical buoyancy body 5, which also encloses the tower 7. Via the buoyancy body 5, the service system 1 is in contact with the water surface and floats on it. Due to the wave stroke, the service system 1 slides along the tower 7 via the rollers 3. Electromagnetic brakes 4 are formed in the hubs of the rollers 3. With the movement transmitted to the rollers 3 and the electromagnetic brakes 4 in the hubs, electrical energy is continuously generated according to the principle of a dynamo, which is brought together with that of the wind turbine via a junction on the service system 1 with an electrical connector of the wind turbine.

On a transport vehicle 10, personnel 9 is brought to the offshore wind turbine for maintenance purposes. As already described, the service system 1 has a vertical position along the tower 7 identical to the transport vehicle 10 due to the contact of the buoyancy body 5 with the water surface. Due to the different weights of the service system 1 and the transport vehicle 10 and the associated inertial differences, the frequency of the oscillation of the service system 1 is adapted to that of the transport vehicle 10 via the electromagnetic brakes 4 in the hubs of the rollers 3 by means of a remote control located on the transport vehicle 10. Due to this braking i.e. damping of the service system 1, the service system 1 and the transport vehicle 10 are in an almost identical phase position.

Due to the ring-shaped platform 6, which is mounted on the side facing away from the sea of the surface of the hollow cylindrical buoyancy body 5, the transport vehicle 10 has a possible approach corridor of 360°. Therefore, the transport vehicle 10 approaches the service system 1 from the most favorable side, the leeward side. Due to the synchronized phasing, service system 1 and transport vehicle 10 are at the same height along the tower 7 of the wind turbine at the same time, so that personnel 9 can transfer from the moored transport vehicle 10 to service system 1 almost independently of external influences like wind or sea conditions. Whereupon the transport vehicle 10 detaches from the service system 1 and moves, for example, further personnel 9 to a further service system 1 at a further maritime structure.

The personnel 9 landed on the service system 1 is guided along a railing 11 extending internally on the platform 6 towards a recess 13 which serves to receive a ladder 8 of the tower 7 of the wind turbine. The rollers 3 can then be continuously braked to such an extent that it is possible to safely transfer to the ladder 8 so that a maintenance platform 12 is accessible. After the personal 9 has transferred to the maintenance platform 12, the electromagnetic brakes 4 in the hubs of the rollers 3 are released and the service system 1 generates increased electrical power.

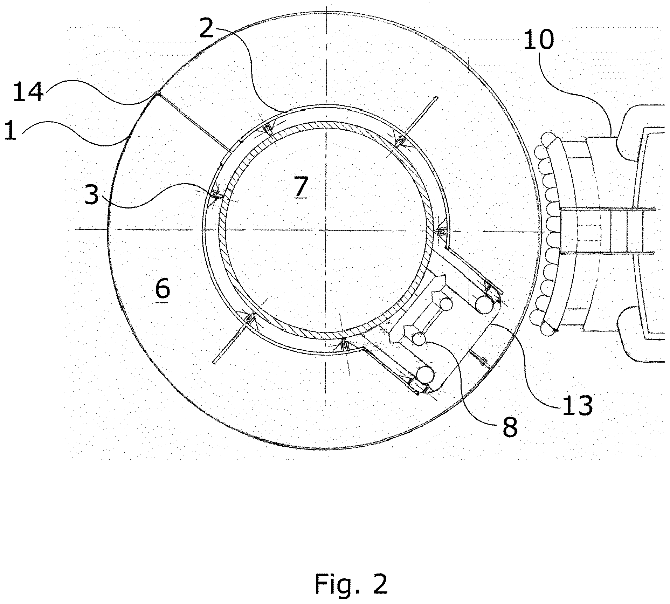

Fig. 2 shows a top view of the service system 1 enclosing the tower 7 of the wind turbine. After the maintenance is completed, the process of transferring the personnel 9 to the moored transport vehicle 10 is performed in reverse order to that described previously. After transferring the personnel 9 to the moored transport vehicle 10, the service system 1 can also be removed from the tower 7 of the wind turbine by means of a hinge 14. For this purpose, bolts are loosened on the side of the buoyancy body 5 opposite the hinge 14. The service system 1 can thus be unfolded and transported away employing the moored transport vehicle.

### List of reference signs

- 1: Service system
- 2: Circumferential wall
- 3: Roller
- 4: Electromagnetic brake
- 5: Buoyancy body
- 6: Platform
- 7: Tower
- 8: Ladder
- 9: Personnel
- 10: Transport vehicle
- 11: Railing
- 12: Maintenance platform
- 13: Recess
- 14: Hinge

## Claims

1. Service system (1) for servicing a marine structure provided with a vertical tower (7) supported on a floating or seabed-mounted structure, wherein
the service system (1) comprises an inner opening for enclosing the tower (7),
the inner opening comprises a circumferential wall (2), the circumferential wall (2) being provided with rollers (3),
the rollers (3) are mounted in such a way that the service system (1) can slide up and down in the vertical direction along the tower (7),
the rollers (3) are equipped with brakes for braking the rollers (3),
the service system (1) is provided with a buoyancy body (5), and
the buoyancy body (5) comprises a platform (6) which enables personnel (9) to be transferred from a transport vehicle (10) which is moored to the service system (1).

2. Service system (1) according to claim 1, wherein the brakes are controllable via a remote control.

3. Service system (1) according to any of the preceding claims, wherein the service system (1) comprises vertically extending guides located on the circumferential wall (2) of the inner opening for tilting prevention.

4. Service system (1) according to any of the preceding claims, wherein the service system (1) comprises a hinge along its diameter for opening and closing the circumferential wall (2) of the inner opening.

5. Service system (1) according to any of the preceding claims, wherein along the circumferential wall (2) of the inner opening brake feet are provided which are extendable into the inner opening in such a way that the service system (1) can maintain a constant vertical position on the tower (7) by the aid of the brake feet pressing against the outside of tower (7).

6. Service system (1) according to claim 5, wherein the brake feet are equipped with hydraulic cylinders.

7. Service system (1) according to any of the preceding claims, wherein the brakes for the rollers (3) are electromagnetic brakes (4).

8. Service system (1) according to any of the preceding claims, wherein the rollers (3) comprise hubs with dynamos with which electrical energy can be generated by rotation of the rollers (3).

9. Service system (1) according to any of the preceding claims, wherein the surface of the service system (1) is provided with solar panels with which electrical energy can be generated.

10. Service system (1) according to any of the preceding claims, wherein the service system (1) comprises a battery for storing electric energy.

11. Service system (1) according to any of the preceding claims, wherein the service system (1) comprises an electrical junction for connecting with an electrical connector of the maritime structure.

12. Service system (1) according to any of the preceding claims, wherein the service system (1) comprises a pump for flooding and draining the buoyancy body (5).

13. Service system (1) according to any of the preceding claims, wherein the buoyancy body (5) has the shape of a hollow cylinder and is arranged along the outside of the service system (1).

14. Service system (1) according to any of the preceding claims, wherein the platform (6) on the buoyancy body (5) also has a cylindrical shape.

15. Service system (1) according to any of the preceding claims, wherein the circumferential wall (2) of the inner opening comprises a recess (13) for accommodating a vertical ladder (8) of the tower (7).
